Europäisches Patentamt

European Patent Office

Office européen des brevets

(19)

(11) Publication number: 0 075 658
A1

(12) EUROPEAN PATENT APPLICATION

(21) Application number: 82105802.1

(22) Date of filing: 30.06.82

(51) Int. Cl.³: C 01 C 3/14

(30) Priority: 23.09.81 US 304728
23.09.81 US 304758

(43) Date of publication of application:
06.04.83 Bulletin 83/14

(84) Designated Contracting States:
BE DE FR GB IT NL

(71) Applicant: AMERICAN CYANAMID COMPANY
1937 West Main Street P.O. Box 60
Stamford Connecticut 06904(US)

(72) Inventor: Trenbeath, Steven Lawrence
244 Windermere Street
Fairfield Connecticut 06430(US)

(72) Inventor: Novak, Robert William
32F Weed Hill Avenue
Stamford Connecticut 06907(US)

(72) Inventor: Feldman, Allan Murry
4 Hunters Lane
Norwalk Connecticut 06850(US)

(74) Representative: Wächtershäuser, Günter, Dr.
Tal 29
D-8000 München 2(DE)

(54) Stable isocyanic acid compositions.

(57) Stable isocyanic acid compositions containing isocyanic acid in an organic solvent therefor, having a small amount of a labile halide compound, such as carbamoyl chloride.

EP 0 075 658 A1

STABLE ISOCYANIC ACID COMPOSITIONS

This invention relates to isocyanic acid, HNCO, and in particular provides stable isocyanic acid compositions which are useful as sources of isocyanic acid for various reactions.

Isocyanic acid is a particularly troublesome reagent because of its high volatility (b.p., 23.5°C and tendency to trimerize to form cyanuric acid, a white solid.

It has been common practice to store isocyanic acid in solution with aromatic and halogenated hydrocarbon solvents to reduce the loss of the compound by evaporation. It has also been common practice to store such solutions at relatively low temperatures, e.g., -20°C to 0°C to minimize trimerization. Even in solution at such low temperatures, however, significant losses of isocyanic acid occur both through volatilization and trimerization.

It is accordingly, an important object of this invention to provide stable compositions of isocyanic acid in which the isocyanic acid is available for reaction and in which losses of isocyanic acid through volatilization and trimerization and the like are minimized. It is a further object of the invention to provide compositions of isocyanic acid which remain stable for days at a time and which can be stored at room temperature and somewhat higher without significant loss of isocyanic acid content.

These and other objects of the invention are generally obtained using solutions of isocyanic acid in solvents such as aromatics, halogenated hydrocarbons,

ethers, aliphatic hydrocarbons and the like, for example, benzene, toluene, chlorobenzene, heptane, tetrahydrofuran, methylene dichloride and the like. Generally the solvent is selected because of its compatability with whatever subsequent reactions are intended for the isocyanic acid. Thus ethyl ether, which forms very stable solutions with isocyanic acid is not usually the solvent of choice because isocyanic acid in ether solutions is difficult to react. Aromatic hydrocarbons such as toluene are usually preferred.

The proportion of isocyanic acid in solution is generally dictated by the eventual use to which the isocyanic acid is to be put. The proportion is also affected by the solubility of isocyanic acid in the particular solvent. Typically, from about 5 to about 30 weight percent isocyanic acid is preferable in the solution.

In accordance with this invention the isocyanic acid solution is stabilized by a small amount of labile halide. The labile halide is probably present in the composition as carbamoyl halide. It is preferably introduced as hydrogen halide or in the form of halide compound which releases hydrogen halide in situ in the isocyanic acid solution. Such compounds include phosphorus halides, thionyl halides and the like. Carbamoyl halides, of course, can be directly introduced. Preferably the halide is hydrogen chloride introduced as a gas.

Generally the amount of labile halide, calculated as the hydrogen halide, which is required to stabilize isocyanic acid solution is less than about 1% by weight based on the isocyanic acid present in the solution. Usually much smaller proportions are all that are required. In most instances less than 0.1% to as low as 0.01% by weight based on the isocyanic acid will suffice.

The stable isocyanic acid solutions of this invention remain stable, for short periods of time even at temperatures as high as 40°C. This is important particularly when large amounts of isocyanic acid must be raised to and held at elevated temperatures during reactions of isocyanic acid.

Hydrogen halides and compounds that produce hydrogen halides in solutions of isocyanic acid are useful as drying agents to remove water and ammonia from such solutions. In the manufacture of isocyanic acid, for example, by catalytic oxidation of hydrogen cyanide, water is a by-product which is formed along with the isocyanic acid. It is difficult to separate water from the isocyanic acid, and when wet isocyanic acid is dissolved in solvents, such as toluene, the water present goes into solution along with the isocyanic acid.

As described in our co-pending application, water and ammonia (possibly also present) can be removed effectively at room temperature by the use of hydrogen halide in molar excess of the amount of water and ammonia present. The mechanism by which the water and ammonia are removed is not fully understood but in effect it results in precipitation of insoluble ammonium halide on a mole for mole basis based on the amount of water and the amount of ammonia in solution.

In forming stabilized compositions in accordance with the present invention, in order that labile halide be present in the final composition, it is necessary to introduce sufficient hydrogen halide or other source of hydrogen halide (e.g. thionyl chloride, sulfonyl chloride, etc) to remove any water or ammonia initially present in the isocyanic acid solution, over and above that quantity required to form labile halide required for stability since water and ammonia will preferentially react with the hydrogen halide to remove it from solution in the form of insoluble ammonium halide.

In order to illustrate the practical application of this invention a series of tests were performed comparing stability of varying isocyanic acid compositions. In each case a dry isocyanic acid-toluene solution was prepared containing 15.6 weight percent isocyanic acid. Although nominally dry the isocyanic acid contained a small amount of water and a small amount of ammonium ion in the amounts of 50 parts per million and 11 parts per million, respectively. Samples of the solution were placed in septum covered serum bottles.

In Examples I and II the bottles were stored at 0°C and 23°C, respectively, without addition of other components.

In Examples III and IV 185 parts per million of hydrogen chloride (148 mole percent based on the water and ammonia content) were added, and the bottles were stored at 0°C and 23°C, respectively.

In Examples V and VI approximately 8 weight percent of a molecular sieve (Zeolite) was added, and the bottles were stored at 0°C and 23°C, respectively. In all six examples samples were withdrawn periodically, and the isocyanic acid content was determined. The data resulting are complied in the annexed Table I.

It will be noted that after reaction with the water and ammonia present the amount of labile chloride present in the isocyanic acid solution, calculated as hydrogen chloride, was about 0.04% by weight based on the isocyanic acid, yet the isocyanic acid remained more stable at 23°C, than unstabilized isocyanic acid stored at 0°C.

Results comparable to Examples III and IV are obtained when hydrogen bromide, hydrogen iodide, thionyl chloride and methane sulfonyl chloride are substituted for hydrogen chloride.

An important advantage of isocyanic acid compositions in accordance with this invention is that the isocyanic acid is anhydrous. Even small amounts of water present in isocyanic acid solutions can cause the reactions of isocyanic acid to be sluggish and can reduce the yields of desired products. These effects of water are not exhibited by compositions of this invention because water, if present initially, is removed by the halide as insoluble ammonium halide.

## TABLE I

| Example | Additive | Time, Days | Temp. $^{\circ}C$ | Cyanic Acid, wt% |
|---------|----------|------------|-------------------|------------------|
| I | None | 0<br>1<br>2<br>4<br>6 | 0<br>"<br>"<br>"<br>" | 15.6<br>15.0<br>14.1<br>12.8<br>11.9 |
| II | None | 0.7<br>1.7<br>5.0 | 23<br>"<br>" | 12.7<br>8.3<br>2.9 |
| III | HCl | 1<br>2<br>6 | 0<br>"<br>" | 14.9<br>14.8<br>15.3 |
| IV | HCl | 1<br>1.7<br>5 | 23<br>"<br>" | 14.9<br>14.3<br>13.2 |
| V | Molecular Sieve | 1<br>2<br>4.2 | 0<br>"<br>" | 13.5<br>12.3<br>10.7 |
| VI | Molecular Sieve | 1<br>4.2 | 23<br>" | 11.5<br>4.6 |

CLAIMS:

1. A stable isocyanic acid composition consisting essentially of isocyanic acid, a solubilizing amount of an organic solvent therefor, and a labile halide compound in an amount calculated as hydrogen halide less than 1 weight percent based on the isocyanic acid.

2. A composition according to Claim 1 in which the labile halide is the chloride.

3. A composition according to Claim 2 in which the labile chloride is introduced as hydrogen chloride.

4. A composition according to Claim 1 in which the labile halide is formed by adding a halide compound selected from the group consisting of hydrogen halide and halide compounds which release hydrogen halide in situ.

5. A composition according to Claim 1 in which the solvent is toluene.

6. A process for removing water from wet isocyanic acid which comprises forming a solution of isocyanic acid containing water in an organic solvent therefor, and adding to said solution a drying agent selected from the group consisting of hydrogen halides and compounds which form a hydrogen halide in said solution, said drying agent being added in an amount sufficient to provide said hydrogen halide in molar excess of the water present.

0075658

Application number

European Patent
Office

EUROPEAN SEARCH REPORT

EP 82 10 5802.1

## DOCUMENTS CONSIDERED TO BE RELEVANT

| Category | Citation of document with indication, where appropriate, of relevant passages | Relevant to claim |
|---|---|---|
| A | <u>US - A - 3 752 880</u> (W. STAMM et al.) | |
| | — | |
| A | Chemical Abstracts vol. 88, no. 20, 1978 15 May 1978 Columbus, Ohio, USA P. VALLES et al. "Stable aqueous solutions of therapeutically active carbimide" page 339, column 1, abstract no. 141697m & ES - A - 448 983 | |
| | ———— | |

**CLASSIFICATION OF THE APPLICATION (Int. Cl. 3)**

C 01 C    3/14

**TECHNICAL FIELDS SEARCHED (Int.Cl. 3)**

C 01 C    3/14

C 07 C    3/20

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 13-12-1982 | BREW |

EPO Form 1503.1  06.78